# EUROPÄISCHE PATENTSCHRIFT

(11) **EP 1 556 600 B1**
(45) Veröffentlichungstag und Bekanntmachung des Hinweises auf die Patenterteilung: **22.11.2006**
(21) Anmeldenummer: 03773468.8
(22) Anmeldetag: 30.09.2003
(51) Int. Cl.: F02D 9/10, F16K 1/226

(54) **VENTIL**
VALVE
SOUPAPE

(30) Priorität: 01.11.2002 DE 10251384
(43) Veröffentlichungstag der Anmeldung: 27.07.2005
(73) Patentinhaber: SIEMENS AKTIENGESELLSCHAFT, 80333 München (DE)
(72) Erfinder: KOHLEN, Peter, 61267 Neu-Anspach (DE); RENNEN, Michael, 65812 Bad Soden (DE)
(86) Internationale Anmeldenummer: PCT/DE2003/003262
(87) Internationale Veröffentlichungsnummer: WO 2004/040110

(56) Entgegenhaltungen:
- DE-A- 2 443 723
- FR-A- 2 683 289
- US-A- 3 905 577
- US-A- 6 135 415

## Beschreibung

Die Erfindung bezieht sich auf ein Ventil als Gasrückführventil eines Kraftfahrzeugs. Ventile, beispielsweise für Gaskanäle sind bekannt. Sie bestehen oftmals aus einem Gehäuse mit einem Ventilsitz, in welchem eine drehbar angeordnete Klappe zum Verschließen des Gaskanals angeordnet ist. Zur Vermeidung von Leckluft wird die Klappe dabei mit einer außen umlaufenden Kolbendichtung versehen. Diese besteht in der Regel aus einem Metallring, der aus Gründen der Nachgiebigkeit einen Spalt aufweist. Im Betrieb entsteht dadurch der Nachteil, dass sich dieser Spalt oftmals nicht vollständig schließen lässt, so dass durch diesen Spalt Leckluft geführt wird, was nicht erwünscht ist.

Aus der FR-A-2 683 289 ist ein Ventil bekannt, das aus einem Gehäuse mit einem Ventilsitz für eine Klappe, die an einer Antriebswelle drehbar gelagert ist, besteht, bei dem außen um die Klappe ein erster Kolbendichtring und ein zweiter Kolbendichtring in einer umlaufenden Nut der Klappe angeordnet sind, die jeweils als Metallring mit einem ersten Spalt beziehungsweise einem zweiten Spalt ausgeführt sind, die nicht miteinander fluchten. Dieses Ventil wird als Rohrdichtung eingesetzt.

Der Erfindung liegt daher die Aufgabe zugrunde, ein einfaches Ventil für einen Gaskanal in einem Kraftfahrzeug bereitzustellen, bei dem die Bildung von Leckluft weitgehend vermieden werden kann. Ein sicheres Verschließen des Gaskanals soll somit auch bei höheren und schwankenden Temperaturen des Gases weitgehend gewährleistet sein.

Die der Erfindung zugrunde liegende Aufgabe wird durch ein Gasrückführventil mit den Merkmalen des Anspruchs 1 gelöst. Der erfindungsgemäße Einsatz des Ventils ist als besonders vorteilhaft anzusehen, weil die durch ein Gasrückführventil eines Kraftfahrzeugs geleiteten Gase in der Regel hohe Temperaturen und hohe Temperaturschwankungen aufweisen und dennoch die Bildung von Leckluft vermieden wird. Der Ventilsitz kann dabei beispielsweise selbst ein Teil des Gehäuses sein. Die Klappe ist in der Regel kreisrund ausgeführt und besteht beispielsweise aus Stahl. Der erste Kolbendichtring sowie der zweite Kolbendichtring sind jeweils als flacher Metallring ausgebildet. Der erste Kolbendichtring weist einen ersten Spalt auf. Der zweite Kolbendichtring weist den zweiten Spalt auf. Bei dem ersten Spalt sowie bei dem zweiten Spalt spricht man jeweils von einem Stoßspiel. Es hat sich in überraschender Weise gezeigt, dass eine Bildung von Leckluft weitgehend vermieden werden kann, sofern der erste Spalt und der zweite Spalt derart positioniert sind, dass sie nicht miteinander fluchten. Dies geschieht bei der ersten Variante dadurch, dass sowohl der erste Kolbendichtring als auch der zweite Kolbendichtring durch einmaliges Punktschweißen an der Klappe des Ventils befestigt werden. Auf diese weise ist sichergestellt, dass eine Fluchtung des ersten Spalts mit dem zweiten Spalt infolge der ortsfesten Positionierung des ersten Kolbendichtrings und des zweiten Kolbendichtrings vermieden wird. Dadurch wird in vorteilhafter Weise verhindert, dass Leckluft sowohl durch den ersten Spalt als auch durch den zweiten Spalt geführt werden kann. Dies ist besonders dann vorteilhaft, sofern die durch das Ventil zu leitenden Gase höhere Temperaturen aufweisen und im ihrer Temperatur stark schwanken. In Einzelfällen kann es auch vorteilhaft sein, den ersten Kolbendichtring oder den zweiten Kolbendichtring als außenspannenden Kolbendichtring und den jeweils benachbarten Kolbendichtring als innenspannenden Kolbendichtring auszuführen.

Eine erste Variante der Erfindung besteht darin, dass in der Nut der Klappe an der Stelle des ersten Spaltes und an der Stelle des zweiten Spaltes jeweils ein Schweißpunkt angeordnet ist. Dabei ist vorteilhaft, dass sowohl der erste Kolbendichtring als auch der zweite Kolbendichtring beispielsweise nicht an einem Punkt mit der Klappe verbunden werden müssen. Die Schweißpunkte in der Nut der Klappe verhindern auf relativ einfache Weise ein Fluchten des ersten Spalts mit dem zweiten Spalt.

Gemäß einer weiteren Variante der Erfindung ist vorgesehen, dass der erste Kolbendichtring oder der zweite Kolbendichtring an ihrer jeweils zum benachbarten Kolbendichtring zugewandten flachen Seite Sicken aufweist. Bei den Sicken handelt es sich um punktförmige Vorsprünge, die sich direkt auf der jeweiligen flachen Seite befinden. Die Sicken pressen sich jeweils an beziehungsweise in die flache Seite des benachbarten Kolbendichtrings, was in vorteilhafter Wiese dazu führt, dass eine Fluchtung des ersten Spaltes mit dem zweiten Spalt ebenfalls vermieden wird. Je nach Ausgestaltung der Sicken kann diese Maßnahme sogar alleine ausreichen, eine Fluchtung des ersten Spaltes mit dem zweiten Spalt zu verhindern, so dass weitere Vorkehrungen zur Vermeidung einer solchen Fluchtung nicht erforderlich sind.

Eine weitere bevorzugte Ausgestaltung der Erfindung besteht darin, dass der Ventilsitz als Stahlring ausgeführt ist, der im Gehäuse eingepresst ist. Auf diese Weise wird vorteilhaft die Verschleißfestigkeit des Ventilsitzes erhöht.

Eine weitere Ausgestaltung der Erfindung besteht darin, dass ein Gehäuse aus Aluminium angeordnet ist. Dadurch kann das Gewicht des Ventils reduziert werden, wobei gleichzeitig die Verschleißfestigkeit im Ventilsitz gegeben ist.

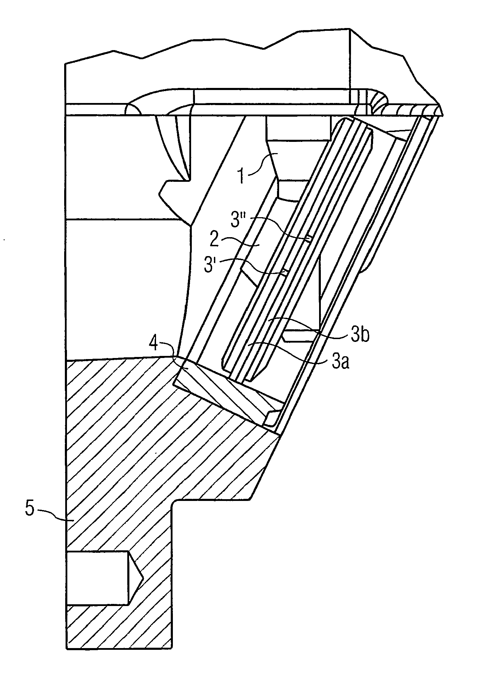

Die Erfindung wird nachfolgend anhand der Zeichnung (Fig.) näher und beispielhaft erläutert.

Fig. zeigt das Ventil im Querschnitt.

In Fig. ist das Ventil im Querschnitt dargestellt. Das Ventil besteht aus einem Gehäuse 5 mit einem Ventilsitz 4 für eine Klappe 2, die an einer Antriebswelle 1 drehbar gelagert ist. Um die Klappe 2 sind ein erster Kolbendichtring 3a und ein zweiter Kolbendichtring 3b in einer umlaufenden Nut der Klappe 2 angeordnet. Der erste Kolbendichtring 3a ist als flacher Metallring mit einem ersten Spalt 3' ausgeführt. Der zweite Kolbendichtring 3b ist als flacher Metallring mit einem zweiten Spalt 3" ausgeführt. Der erste Spalt 3' und der zweite Spalt 3" fluchten nicht miteinander. Dadurch wird in vorteilhafter Weise erreicht, dass Leckluft von der einen Seite der Klappe 2 nicht über den ersten Kolbendichtring 3a und den zweiten Kolbendichtring 3b auf die andere Seite der Klappe 2 und umgekehrt gelangen kann. Der Ventilsitz 4 ist als Stahlring ausgeführt, der im Gehäuse 5, das in vorteilhafter Weise aus Aluminium gefertigt ist, eingepresst ist. Das Ventil eignet sich in besonderer Weise als Gasrückführventil eines Kraftfahrzeuges.

## Patentansprüche

1. Gasrückführventil eines Kraftfahrzeuges, mit einem Gehäuse (5), das einen Ventilsitz (4) für eine Klappe (2) aufweist, die an einer Antriebswelle (1) drehbar gelagert ist, wobei außen um die Klappe (2) ein erster Kolbendichtring (3a) und ein zweiter Kolbendichtring (3b) in einer umlaufenden Nut der Klappe (2) angeordnet sind, die jeweils als Metallring mit einem ersten Spalt (3') beziehungsweise einem zweiten Spalt (3") ausgeführt sind, die nicht miteinander fluchten,
**dadurch gekennzeichnet, dass** der erste Kolbendichtring (3a) und der zweite Kolbendichtring (3b) dadurch in ihrer radialen Relativposition gehalten sind, dass in der umlaufenden Nut der Klappe (2) jeweils an der Stelle des ersten Spaltes (3') und an der Stelle des zweiten Spaltes (3") ein Schweißpunkt angeordnet ist und/oder der erste Kolbendichtring (3a) oder der zweite Kolbendichtring (3b) auf der flachen Seite, die dem benachbarten Kolbendichtring (3a, 3b) zugewandt ist, Sicken aufweisen.

2. Gasrückführventil nach Anspruch 1,
**dadurch gekennzeichnet, dass** der Ventilsitz (4) als Stahlring ausgeführt ist, der im Gehäuse (5) eingepresst ist.

3. Gasrückführventil nach Anspruch 2,
**dadurch gekennzeichnet, dass** das Gehäuse (5) aus Aluminium ist.

## Claims

1. Gas recirculation valve for a motor vehicle, having a housing (5) which has a valve seat (4) for a flap (2) which is rotatably mounted on a drive shaft (1), a first piston sealing ring (3a) and a second piston sealing ring (3b) being arranged on the outside around the flap (2) in a circumferential groove of the flap (2), said sealing rings (3a, 3b) being each embodied as a metal ring with a first gap (3') or a second gap (3") which are not aligned with one another, **characterized in that** the first piston sealing ring (3a) and the second piston sealing ring (3b) are held in their relative radial positions by virtue of the fact that in the circumferential groove of the flap (2) in each case a welding point is arranged at the position of the first gap (3') or at the position of the second gap (3") and/or the first piston sealing ring (3a) or the second piston sealing ring (3b) have beads on the flat side facing the adjacent piston sealing ring (3a, 3b).

2. Gas recirculation valve according to Claim 1, **characterized in that** the valve seat (4) is embodied as a steel ring which is pressed into the housing (5).

3. Gas recirculation valve according to Claim 2, **characterized in that** the housing (5) is made of aluminium.

## Revendications

1. Soupape de réinjection des gaz dans un véhicule automobile, avec un corps de soupape (5) qui comporte un siège de soupape (4) pour un clapet (2), lequel est monté en rotation sur un arbre d'entraînement (1), où sont disposés extérieurement autour du clapet (2), dans une rainure périphérique du clapet (2), un premier segment d'étanchéité (3a) et un deuxième segment d'étanchéité (3b), qui sont chacun exécutés en tant que bague en métal avec une première fente (3') et, respectivement, une deuxième fente (3") qui ne sont pas en alignement l'une sur l'autre,
**caractérisée par le fait que** le premier segment d'étanchéité (3a) et le deuxième segment d'étanchéité (3b) sont maintenus dans leur position relative radiale **par le fait que**, dans la rainure périphérique du clapet (2), est disposé un point de soudure à l'endroit de la première fente (3') et à l'endroit de la deuxième fente (3") et/ou que le premier segment d'étanchéité (3a) et le deuxième segment d'étanchéité (3b) comportent des collets sur la face plate qui est tournée vers le segment d'étanchéité (3a, 3b) voisin.

2. Soupape de réinjection des gaz selon la revendication 1,
**caractérisée par le fait que** le siège de soupape (4) est conçu comme bague en acier qui est engagée par pression dans le corps de soupape (5).

3. Soupape de réinjection des gaz selon la revendication 2,
**caractérisée par le fait que** le corps de soupape (5) est en aluminium.
